# EUROPÄISCHE PATENTSCHRIFT

(11) **EP 3 038 991 B1**
(45) Veröffentlichungstag und Bekanntmachung des Hinweises auf die Patenterteilung: **30.08.2017**
(21) Anmeldenummer: 14747520.6
(22) Anmeldetag: 31.07.2014
(51) Int. Cl.: C04B 2/06

(54) **VERFAHREN UND VORRICHTUNG ZUR HERSTELLUNG VON KALKPRODUKTEN UND PUZZOLAN**
PROCESS AND APPARATUS FOR PRODUCTION OF LIME PRODUCTS AND POZZOLAN
PROCÉDÉ ET DISPOSITIF POUR LA PRÉPARATION DE PRODUITS À BASE DE CHAUX ET DE POUZZOLANE

(30) Priorität: 28.08.2013 DE 102013109324
(43) Veröffentlichungstag der Anmeldung: 06.07.2016
(73) Patentinhaber: ThyssenKrupp Industrial Solutions AG, 45143 Essen (DE)
(72) Erfinder: ENDERS, Michael, 48143 Münster (DE)
(74) Vertreter: thyssenkrupp Intellectual Property GmbH
(86) Internationale Anmeldenummer: PCT/EP2014/002099
(87) Internationale Veröffentlichungsnummer: WO 2015/028115

(56) Entgegenhaltungen:
- EP-A2- 1 180 501
- DE-C1- 19 707 038
- US-A- 4 236 932

## Beschreibung

Die Erfindung betrifft ein Verfahren und eine Vorrichtung zur Herstellung von Kalkprodukten und Puzzolan.

Beim Zementklinkerherstellungsprozess wird die gewünschte chemische Zusammensetzung des Klinkers dadurch erhalten, dass ein Rohmehl zumindest aus einem oder mehreren Materialien so gemischt und mit der chemischen Zusammensetzung der Brennstoffasche korrigiert wird, dass die chemische Zusammensetzung des Klinkers einen Kalkstandard von 85-100, ein Silikatmodul von 1-4 und ein Aluminatmodul von 0,5-4 aufweist. Als Ausgangsstoffe für das Rohmehl werden Mergel, Kalkstein, Sand, Ton und Eisenerz eingesetzt, wobei auch weitere Stoffe, insbesondere industrielle Reststoffe, die zur Einstellung der gewünschten Moduli- und Mineralphasengehalte genutzt werden, zugegeben werden. Beim Klinkerherstellungsprozess wird das Rohmehl üblicherweise in 4 bis 6 Zyklonstufen aufgewärmt, wobei anhaftendes Wasser und Strukturwasser aus Tonmineralien ausgetrieben wird. Anschließend entsäuert das Rohmehl im Vorwärmer teilweise oder in einem Kalzinator nahezu vollständig (> 95%) indem CaCO₃ zu CaO kalziniert wird. Der Klinker entsteht dann in einer Sinterreaktion im Drehrohrofen aus den vorkalzinierten Produkten Das Endproduktklinker besteht aus den Klinkerphasen C3S, C2S, C3A, C4AF und weiteren Nebenphasen.

Im Vorwärmer werden Tonminerale bereits zu Metatonen umgewandelt. Bei Metatonen handelt es sich um röntgenamorphe, durch Aufheizen der Tonminerale gebildete Zwischenphasen, die latenthydraulische Eigenschaften aufweisen und als Zumahlstoffe in Zementen verwendet werden können. Hierzu ist kommerziell erhältlicher Metakaolin ein ausgezeichnetes Beispiel, das vielfach als Klinkersubstitut im Zement eingesetzt wird, um den Klinkeranteil zu reduzieren oder das, aufgrund spezieller Produkteigenschaften, wie einer verlangsamten Wärmefreisetzung, einer verbesserten Dauerhaftigkeit oder einer geringeren Durchlässigkeit im Beton, speziellen Zementen zugesetzt wird.

Im Bereich des Vorwärmers bilden sich zudem, abhängig von der Reaktivität des Rohmehls, bereits erste Klinkerphasen wie C2S, C3A und C4AF und reaktive Zwischenphasen wie C12A7 und CA. Weitere Klinkerphasen werden zudem als Klinkerstaub mit dem heißen Verbrennungsgas aus dem Drehrohrofen in den Vorwärmer verfrachtet und in den Zyklonen mit dem aufheizten Rohmehl abgeschieden. Klinkerphasen und Zwischenphasen im Heißmehl reagieren hydraulisch und sind daher ein wertvolles Produkt.

Das Heißmehl enthält zudem, abhängig von den Kreisläufen und der Staubbeladung im Ofen, Alkalichloride, Alkalisulfate und Klinkerphasen. Einige dieser Verbindungen werde auch als reaktionsanregende, beschleunigende Substanzen oder als Sulfatträger Zementen zugesetzt. Jedoch erfordert die Abtrennung dieser Phasen besondere Verfahren, wie z. B. anhand eines komplexen Nassprozesses in der AT 511 410 A1 beschrieben ist. Der Einsatz in Zementen ist aber aufgrund der maximal zulässigen Chlorgehalte im Falle der Bypassstäube limitiert. Aus der US 4,236,932 ist es bereits bekannt, einen Teil des vorgewärmten Rohmehls für die Zementklinkerherstellung auszuschleusen, um ein weiteres hydraulisches Bindemittel herzustellen. Das ausgeschleuste vorgewärmte Rohmehl wird einer Kühleinrichtung und einer anschließenden Filtereinrichtung zugeführt, wo das Material durch Zugabe von Wasser gefiltert oder gequenscht wird.

Der Erfindung liegt die Aufgabe zugrunde, ein Verfahren und eine Vorrichtung zur kostengünstigen Herstellung von Kalkprodukten und Puzzolan anzugeben, wobei ein Heißmehl der Zementklinkerherstellung genutzt wird.

Erfindungsgemäß wird diese Aufgabe durch die Merkmale der Ansprüche 1 und 10 gelöst.

Das erfindungsgemäße Verfahren zu Herstellung von Kalkprodukten und Puzzolan ist dadurch gekennzeichnet, dass
a. Zementrohmehl in einem Suspensions-Schwebewärmetauscher zu Heißmehl wärmebehandelt wird,
b. ein im Heißmehl enthaltender Freikalk durch Zugabe von Wasser gelöscht wird,
c. das Heißmehl nach der Löschung des Freikalks einer Attritionsmahlung unterzogen wird, sodass eine Ca-reiche, spezifisch leichtere, feinkörnigere Fraktion und eine Si-reiche, spezifisch schwerere, grobkörnigere Fraktion entstehen und
d. die Ca-reiche, spezifisch leichtere, feinkörnigere Fraktion und die Si-reiche, spezifisch schwerere, grobkörnigere Fraktion voneinander getrennt werden.

Die erfindungsgemäße Vorrichtung zur Durchführung dieses Verfahrens sieht im Wesentlichen folgende Aggregate vor:
a. einen Suspensions-Schwebewärmetauscher (1) zur Wärmebehandlung von Zementrohmehl zu Heißmehl,
b. ein Aggregat zur Löschung des im Heißmehl enthaltenden Freikalks durch Zugabe von Wasser,
c. ein Attritionsmahlaggregat zur Attritionsmahlung des Heißmehls nach der Löschung des Freikalks zur Bildung einer Ca-reichen, spezifisch leichteren, feinkörnigeren Fraktion und einer Si-reichen, spezifisch schwereren, grobkörnigeren Fraktion und
d. ein Trennaggregat zur Trennung der Ca-reichen, spezifisch leichteren, feinkörnigeren Fraktion von der Si-reichen, spezifisch schwereren, grobkörnigeren Fraktion.

Durch das erfindungsgemäße Verfahren wird es Zementherstellern ermöglicht, ohne Zugriff auf hochreine Kalksteine bzw. ohne einen speziellen Kalzinationsofen Kalkprodukte und Puzzolan kostengünstig herzustellen. Die Si-reiche, spezifisch schwerere, grobkörnigere Fraktion ist hydraulisch aktiv und weist durch den Gehalt an Klinkermineralien und Alkaliverbindungen eine besonders gute Reaktivität auf.

So ergeben sich insbesondere eine gute Frühfestigkeit und eine hohe Endfestigkeit des damit hergestellten Zements.

In der Regel werden bei dem erfindungsgemäßen Verfahren nur Teilströme der Zementklinkerproduktion genutzt, sodass kein Produktionsausfall an Klinker entsteht. So kann das ausgeschleuste Material durch eine erhöhte Rohmehlaufgabe ausgeglichen werden, sodass die verfügbare Klinkermenge gleichbleibt.

Das im Suspension-Schwebewärmetauscher zu Heißmehl wärmebehandelte Zementrohmehl besteht mineralogisch aus der Hauptkomponente Freikalk sowie Metatonen, Quarz, residualem Kalzit und Fe-Oxiden sowie eine Reihe weiterer Mineralneubildungen und Klinkerphasen sowie komplexen Sulfaten und untergeordneten Chloriden. Der Freikalkgehalt in geeigneten Heißmehlen liegt bei 2-Gew.-65%, idealerweise zwischen 30-50 Gew.-% bezogen auf das gesamte Heißmehl. Im anschließenden Verfahrenschritt wird der im Heißmehl enthaltene Freikalk durch Zugabe von Wasser gelöscht, d. h. es kommt zu einer Hydratisierung des Freikalks. Das Heißmehl besteht nach der Löschung des Freikalks aus der Hauptphase Calciumhydroxid und den Nebenbestandteilen Metaton, Quarz, Klinkermineralien und untergeordneten Alkalisulfaten und Alkalichloriden. Das Heißmehl liegt an dieser Stelle als Pulver oder leicht agglomeriert vor.

Ein Attritionsmahlaggregat, wie beispielsweise eine Kugelmühle mit leichten Mahlkörpern aus Keramik oder Obstkernen, eine Vertikalrollenmühle mit geringem Mahldruck oder eine Gutbettwalzenmühle mit geringem Mahldruck oder ein Desagglomerator, werden zur Desagglomeration des Heißmehls genutzt. Es sind aber auch andere schonend zerkleinernde Aggregate oder auch der Einsatz von Standardmahlkörpern denkbar. Es ist auch denkbar, dass die Löschung des Freikalk und die Attritionsmahlung in ein und demselben Aggregat zusammen durchgeführt werden. Zweck der Attritionsmahlung ist die reibende Zerkleinerung der leicht mahlbaren Calciumhydroxid-Partikel und einem Belassen anderer Partikel in der ursprünglichen Korngröße aus der Rohmehlherstellung. Die dabei entstehende Ca-reiche, spezifisch leichtere, feinkörnigere Fraktion (im Folgenden Ca-reiche Fraktion) und die Si-reiche, spezifisch-schwerere, grobkörnigere Fraktion (im Folgenden Si-reiche Fraktion) werden anschließend in einem Sichtaggregat, insbesondere in einem Windsichter voneinander getrennt. Die Trennung in einem Windsichter folgt dem aerodynamischen Durchmesser der Partikel und einem Formfaktor. Die leichteste Komponente in der Mischung ist das Calciumhydroxid mit einer Dichte von 2.23 - 2.30 g/cm³, während die übrigen Minerale Quarz, Klinkerminerale, Metaton und Kalzit Dichten größer 2.6 g/cm³ aufweisen. Gleichzeitig liegt das Calciumhydroxid aufgrund der Mahlung bei der Herstellung des Rohmehls und der Attritionsmahlung nach der Löschung in den geringsten Korngrößen vor.

Im vorliegenden Fall wird der ursprünglich nur geringe Dichteunterschiede der einzelnen Partikel im Rohmehl durch den Löschvorgang im hydratisierten Heißmehl erhöht. Bei der Attritionsmahlung wird das sehr leicht mahlbare Calciumhydroxid selektiv weiter zerkleinert. Die Kombination dieser Schritte, d. h. die bevorzugte Zerkleinerung des Calciumhydroxid bei der Herstellung des Rohmehls und die Dichteerniedrigung durch Hydration des Freikalks und die Attrition des gelöschten Heißmehls, ermöglichen die Trennung bei ausreichender Trennschärfe in eine Ca-reiche Fraktion und eine Si-reiche Fraktion. Insbesondere ein Windsichter trennt dabei die leichte, in geringen Korngrößen vorliegende Ca-reiche Fraktion bevorzugt in das Produkt und die schwerere Si-reiche Fraktion in die Griese. Alternativ sind aber auch Siebe oder eine Absetzkammer für die Trennung der beiden Faktionen nach Korngrößenschnitten möglich.

Die Löschung des Freikalks erfolgt vorzugsweise durch eine Trockenlöschung. Da diese Reaktion unter ständiger Wärmeabgabe erfolgt, kann die Wärme bei überschüssigem Wasser teilweise oder vollständig zur Trocknung verbraucht werden. Die Trockenlöschung ist daher einer Nasslöschung aufgrund des geringeren Wärmebedarfs für die anschließende Trocknung vorzuziehen. Es ist aber auch durchaus denkbar, dass für die ggf. erforderliche zusätzliche Trocknung weitere Wärme, beispielsweise aus dem parallelen Klinkerprozess, bereitgestellt wird. Auch ein zusätzliches Aggregat, wie ein Steigrohrtrockner zur Abfuhr überschüssiger Feuchte könnte benutzt werden.

Des Weiteren ist es zweckmäßig wenn die Löschung des Freikalks mit überstöchiometrischer Wasserzugabe im Bereich von 1-3 bezogen auf den Freikalkgehalt, vorzugsweise im Bereich von 2 +/- 0,5 bezogen auf den Freikalkgehalt erfolgt. Um den Wärmeverlust bei der nachgelagerten Trocknung von überschüssigem Wasser niedrig zu halten, ist ein möglichst geringer Überschuss an Wasser zu wählen, der im Einzelfall vom Material und Prozess abhängt. Die untere Grenze liegt bei stöchiometrischer Zugabe CaO/H₂O = 1. In Einzelfällen kann durch eine zu starke Wärmebehandlung des Heißmehls im Suspension-Schwebewärmetauscher die Reaktivität des Freikalks im Heißmehl erniedrigt sein. In diesem Fall ist die vollständige oder annähernd vollständigen Umsetzung des Freikalks erst bei höheren stöchiometrischen Überschüssen an Wasser zu erreichen. Hierbei haben sich stöchiometrische Verhältnisse von CaO/H₂O im Bereich von 2.5 - 3.5 bewährt.

Die Attritionsmahlung erfolgt vorzugsweise in einer Kugelmühle, einer Vertikalmühle oder einer Walzenmühle. Im Falle einer Kugelmühle hat es sich als vorteilhaft erwiesen, wenn keramische Mahlkörper eingesetzt werden, die einen geringeren Abrieb und eine geringere Masse im Vergleich zu stählernen Mahlkörpern haben. Der farblich hellere Abrieb von keramischen Mahlkörpern ist auch insbesondere zur Herstellung weißer Produkte besonders geeignet. Wird zur Attritionsmahlung eine Vertikalmühle oder einer Walzenmühle verwendet, wird bevorzugt ein verhältnismäßig geringer Mahldruck im Bereich von 0,15-15 N/mm², vorzugsweise von 0,15-4 N/mm², eingestellt.

Die Ca-reiche Fraktion liegt bereits in hoher Feinheit als Calciumhydroxid vor und kann direkt als Feinkalk für Baustoffe, wie Putze oder als Zuschlagsstoff für Zement genutzt werden. Die Zugabe von hochfeinem Calciumhydroxid zu Zementen beschleunigt die Festigkeitsentwicklung des Zementes. Es ist aber auch denkbar, das Calciumhydroxid nass oder trocken weiter angereichert wird und zur Herstellung von CaCO₃-Präzipipaten oder anderen kalk-basierten Produkten als Vorprodukt weiter genutzt werden. Für einfache Anwendungen im Baubereich sind aber auch durchaus Fraktionen mit höheren Anteilen an Verunreinigungen zulässig. Für hochwertige Anwendungen wäre die Sichtung für hohe Produktreinheiten und Produktfeinheiten anzupassen. Die Si-reiche Fraktion besteht aus inerten Phasen und aktiven Phasen, wie Metatonen und Klinkermineralien. Dabei ergeben sich verschiedene Anwendungsfälle für dieses Material. Sie können aufgrund der hydraulischen Aktivität der Metatone in Zementen mit synthetischen Puzzolanen wie den II A/B M Mischzementen oder II A/B Q Zementen als aktiver Stoff eingesetzt werden oder aber für die Herstellung von Spezialzementen, z. B. Bodenbinder oder Bergbauzemente, genutzt werden. Im einfachsten Fall wird die Si-reiche Fraktion als Nebenprodukt aus der Klinkerproduktion dem Zement als Nebenbestandteil in Gehalten bis zu 5% zugemischt. Nur im Fall unzureichender Reaktivität, beispielsweise durch einen sehr hohen Quarzanteil, könnte man die Si-reiche Fraktion als Silizium- und Aluminiumträger dem Rohmehl für die Zementherstellung wieder zuführen.

Das erfindungsgemäße Verfahren bietet die Möglichkeit, durch die Kombination von Lösch-, Zerkleinerungs- und Trennverfahren mit überschaubaren Investitionskosten aus Zementrohmehl Kalkprodukte und synthetische Puzzolane herzustellen. Durch das Ausschleusen des Materials vor dem Ofen ergibt sich bezogen auf den Zement auch ein geringerer spezifischer Energiebedarf. In allen Fällen können bei geringeren Investitionskosten zusätzliche Produkte und Vorprodukte für Zemente und Kalkanwendungen im Bau und als Vorstufen für Ca-reiche Produkte hergestellt werden, sodass das Produktspektrum eines Zementwerkes erweitert wird.

Weitere Vorteile und Ausgestaltungen der Erfindung werden anhand der nachfolgenden Beschreibung und der Zeichnung näher erläutert.

In der Zeichnung zeigen
- Fig. 1: ein Blockschaltbild einer erfindungsgemäßen Vorrichtung zur Herstellung von Kalkprodukten und Puzzolan gemäß einem ersten Ausführungsbeispiel und
- Fig. 2: ein Blockschaltbild einer erfindungsgemäßen Vorrichtung zur Herstellung von Kalkprodukten und Puzzolan gemäß einem zweiten Ausführungsbeispiel.

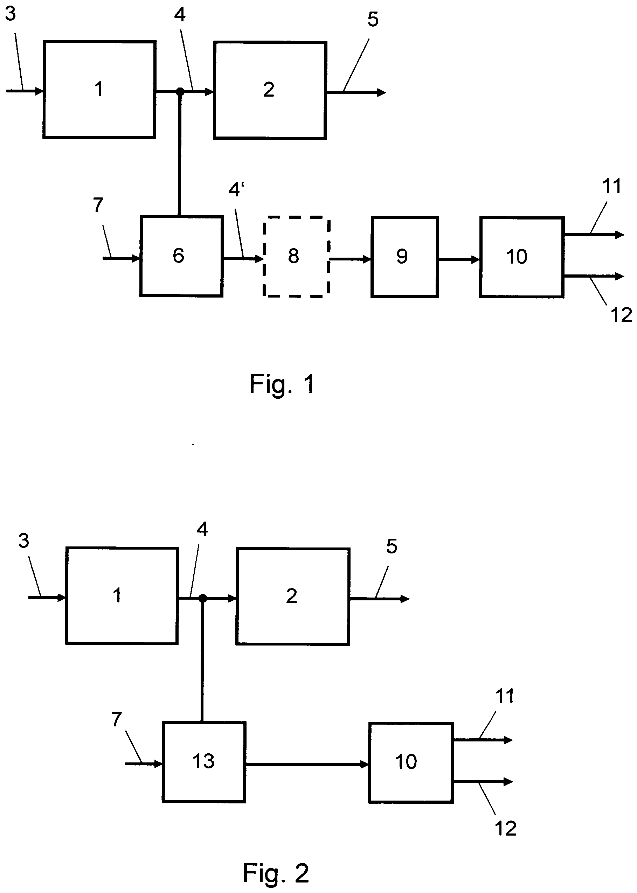

In Fig. 1 ist mit dem Bezugszeichen 1 ein Suspensions-Schwebewärmetauscher und mit dem Bezugszeichen 2 ein Ofen einer Zementklinkerherstellungsanlage schematisch herstellt. Zementrohmehl 3 wird im Suspensions-Schwebewärmetauscher 1 zu Heißmehl 4 wärmebehandelt, bevor es im Ofen 2 zu Zementklinker 5 gebrannt wird.

Ein Teil des im Suspensions-Schwebewärmetauschers 1 zu Heißmehl wärmebehandelten Rohmehls 3 wird ausgeschleust und einem Aggregat 6 zur Löschung des im Heißmehl 4 enthaltenen Freikalks durch Zugabe von Wasser 7 gelöscht. Beim Aggregat 6 handelt es sich vorzugsweise um ein Trockenlöschaggregat, dass mit einer überstöchiometrischen Wasserzugabe im Bereich von 1 - 3.5 bezogen auf den Freigehalt, vorzugsweise im Bereich von 2 +/-0,5 bezogen auf den Freikalkgehalt arbeitet. Durch die Löschung des Freikalks wird Wärme freigesetzt, die zur Trocknung des gelöschten Heißmehls dient. Sollte die Wärme für die Trocknung nicht ausreichen, kann dem Löschungsaggregat 6 eine Trocknungseinrichtung 8 nachgeschaltet sein. Das trockengelöschte Heißmehl 4' gelangt nach dem Löschaggregat 6 entweder in die Trocknungseinrichtung 8 oder direkt in ein Attritionsmahlaggregat 9, welches beispielsweise durch eine Kugelmühle, eine Vertikalmühle oder einer Walzenmühle gebildet werden kann. Das Attritionsmahlaggregat wird so betrieben, dass es zu einer reibenden Zerkleinerung kommt, bei der im Wesentlichen nur die leichter mahlbaren Calciumhydroxid-Partikel zerkleinert werden, während die anderen, schwer mahlbaren Partikel in ihre ursprüngliche Korngröße belassen werden. Dadurch entsteht im Attritionsmahlaggregat eine Ca-reiche, spezifisch leichtere und feinkörnigere Fraktion 11 und eine Si-reiche spezifisch schwere, grobkörnigere Fraktion 12, die im nachfolgenden Trennaggregat 10, insbesondere einem Windsichter voneinander getrennt werden.

Bei dem in Fig. 2 gezeigten zweiten Ausführungsbeispiel sind das Aggregat 6 zum Löschen des Freikalks und das Attritionsmahlaggregat 9 in einem Aggregat 13 zusammengeführt. Hierbei kann es insbesondere um eine Kugelmühle handeln. In diesem Aggregat 13 findet somit die Löschung des Freikalks, die Trocknung und die Attritionsmahlung statt. Im nachfolgenden Trennaggregat 10 wird dann wiederum die Ca-reiche Fraktion 11 von der Si-reichen Fraktion 12 getrennt.

## Patentansprüche

1. Verfahren zur Herstellung von Kalkprodukten und Puzzolan, wobei
a. Zementrohmehl (3) in einem Suspensions-Schwebewärmetauscher (1) zu Heißmehl (4) wärmebehandelt wird,
b. ein im Heißmehl (4) enthaltender Freikalk durch Zugabe von Wasser (7) gelöscht wird,
c. das Heißmehl (4) nach der Löschung des Freikalks einer Attritionsmahlung unterzogen wird, sodass eine Ca-reiche, spezifisch leichtere, feinkörnigere Fraktion (11) und eine Si-reiche, spezifisch schwerere, grobkörnigere Fraktion (12) entstehen und
d. die Ca-reiche, spezifisch leichtere, feinkörnigere Fraktion (11) und die Si-reiche, spezifisch schwerere, grobkörnigere Fraktion (12) voneinander getrennt werden.

2. Verfahren nach Anspruch 1, **dadurch gekennzeichnet, dass** die Löschung des Freikalks durch eine Trockenlöschung erfolgt, wobei Ca(OH)₂ entsteht.

3. Verfahren nach Anspruch 1, **dadurch gekennzeichnet, dass** die Löschung des Freikalks mit überstöchiometrischer Wasserzugabe im Bereich von 1 bis 3.5 bezogen auf den Freikalkgehalt erfolgt.

4. Verfahren nach Anspruch 1, **dadurch gekennzeichnet, dass** die Löschung des Freikalks mit überstöchiometrischer Wasserzugabe im Bereich von 2 +/- 0,5 bezogen auf den Freikalkgehalt erfolgt.

5. Verfahren nach Anspruch 1, **dadurch gekennzeichnet, dass** das gelöschte Heißmehl vor der Trennung der Ca-reichen, spezifisch leichteren, feinkörnigeren Fraktion (11) von der Si-reichen, spezifisch schwereren, grobkörnigeren Fraktion (12) getrocknet wird, wobei dazu vorzugsweise eine beim Löschvorgang entstehende Wärme verwendet wird.

6. Verfahren nach Anspruch 1, **dadurch gekennzeichnet, dass** die Attritionsmahlung in einer Kugelmühle, einer Vertikalmühle oder einer Walzenmühle erfolgt.

7. Verfahren nach Anspruch 1, **dadurch gekennzeichnet, dass** die Wärmebehandlung des Zementrohmehls in einem Suspensions-Schwebewärmetauscher (1) eines Zementklinkerherstellungsprozesses erfolgt, wobei der für das Verfahren nach Anspruch 1 benötigte Anteil des Heißmehls (4) aus dem Zementklinkerherstellungsprozess ausgekoppelt wird.

8. Verfahren nach Anspruch 1, **dadurch gekennzeichnet, dass** die Attritionsmahlung in einer Kugelmühle mit keramischen Mahlkörpern erfolgt.

9. Verfahren nach Anspruch 1, **dadurch gekennzeichnet, dass** die Attritionsmahlung in einer Vertikalmühle oder eine Walzenmühle mit einem Mahldruck im Bereich von 0.15 bis 15 N/mm² erfolgt.

10. Vorrichtung zur Herstellung von Kalkprodukten und Puzzolan gemäß dem Verfahren nach Anspruch 1 mit
a. einem Suspensions-Schwebewärmetauscher (1) zur Wärmebehandlung von Zementrohmehl (3) zu Heißmehl (4),
b. einem Aggregat (6) zur Löschung des im Heißmehl (4) enthaltenden Freikalks durch Zugabe von Wasser,
c. einem Attritionsmahlaggregat (9) zur Attritionsmahlung des Heißmehls nach der Löschung des Freikalks zur Bildung einer Ca-reichen, spezifisch leichteren, feinkörnigeren Fraktion (11) und einer Si-reichen, spezifisch schwereren, grobkörnigeren Fraktion (12) und
d. einem Trennaggregat (10) zur Trennung der Ca-reichen, spezifisch leichteren, feinkörnigeren Fraktion (11) von der Si-reichen, spezifisch schwereren, grobkörnigeren Fraktion (12).

## Claims

1. Process for producing lime products and pozzolan, wherein
a. cement raw meal (3) is heat treated in an entrained-flow heat exchanger (1) to give hot meal (4),
b. a free lime present in the hot meal (4) is slaked by addition of water (7),
c. the hot meal (4) is, after slaking of the free lime, subjected to attrition milling so that a Ca-rich fraction (11) having a relatively low specific gravity and a relatively fine particle size and an Si-rich fraction (12) having a relatively high specific gravity and a relatively coarse particle size are formed and
d. the Ca-rich fraction (11) having a relatively low specific gravity and a relatively fine particle size and the Si-rich fraction (12) having a relatively high specific gravity and a relatively coarse particle size are separated from one another.

2. Process according to Claim 1, **characterized in that** the slaking of the free lime is carried out by dry slaking, forming Ca(OH)₂.

3. Process according to Claim 1, **characterized in that** the slaking of the free lime is carried out using a superstoichiometric addition of water in the range from 1 to 3.5, based on the free lime content.

4. Process according to Claim 1, **characterized in that** the slaking of the free lime is carried out using a superstoichiometric addition of water in the range of 2 ± 0.5, based on the free lime content.

5. Process according to Claim 1, **characterized in that** the slaked hot meal is dried before separation of the Ca-rich fraction (11) having a relatively low specific gravity and a relatively fine particle size from the Si-rich fraction (12) having a relatively high specific gravity and a relatively coarse particle size, with heat liberated in the slaking operation preferably being used for drying.

6. Process according to Claim 1, **characterized in that** the attrition milling is carried out in a ball mill, a vertical mill or a roller mill.

7. Process according to Claim 1, **characterized in that** the heat treatment of the cement raw meal is carried out in an entrained-flow heat exchanger (1) of a cement clinker production process, with the proportion of the hot meal (4) required for the process according to Claim 1 being taken from the cement clinker production process.

8. Process according to Claim 1, **characterized in that** the attrition milling is carried out in a ball mill using ceramic milling media.

9. Process according to Claim 1, **characterized in that** the attrition milling is carried out in a vertical mill or a roller mill using a milling pressure in the range from 0.15 to 15 N/mm².

10. Apparatus for producing lime products and pozzolan by the process according to Claim 1 comprising:
a. an entrained-flow heat exchanger (1) for hot treatment of cement raw meal (3) to give hot meal (4),
b. an apparatus (6) for slaking the free lime present in the hot meal (4) by addition of water.
c. an attrition milling apparatus (9) for attrition milling of the hot meal after slaking the free lime to form a Ca-rich fraction (11) having a relatively low specific gravity and a relatively fine particle size and an Si-rich fraction (12) having a relatively high specific gravity and a relatively coarse particle size and
d. a separation apparatus (10) for separating the Ca-rich fraction (11) having a relatively low specific gravity and a relatively fine particle size from the Si-rich fraction (12) having a relatively high specific gravity and a relatively coarse particle size.

## Revendications

1. Procédé de fabrication de produits à base de chaux et de pouzzolane, selon lequel
a. de la farine brute de ciment (3) est traitée thermiquement dans un échangeur thermique à surface raclée pour une suspension (1) en farine chaude (4),
b. la chaux libre contenue dans la farine chaude (4) est éteinte par ajout d'eau (7),
c. après l'extinction de la chaux libre, la farine chaude (4) est soumise à un broyage par attrition, de manière à former une fraction riche en Ca, de densité spécifique plus légère, à grains fins (11), et une fraction riche en Si, de densité spécifique plus lourde, à grains grossiers (12), et
d. la fraction riche en Ca, de densité spécifique plus légère, à grains fins (11), et la fraction riche en Si, de densité spécifique plus lourde, à grains grossiers (12) sont séparées l'une de l'autre.

2. Procédé selon la revendication 1, **caractérisé en ce que** l'extinction de la chaux libre a lieu par une extinction à sec, du Ca(0H)₂ se formant.

3. Procédé selon la revendication 1, **caractérisé en ce que** l'extinction de la chaux libre a lieu avec ajout d'eau sur-stoechiométrique dans la plage allant de 1 à 3,5 par rapport à la teneur en chaux libre.

4. Procédé selon la revendication 1, **caractérisé en ce que** l'extinction de la chaux libre a lieu avec ajout d'eau sur-stoechiométrique dans la plage de 2 ± 0,5 par rapport à la teneur en chaux libre.

5. Procédé selon la revendication 1, **caractérisé en ce que** la farine chaude éteinte est séchée avant la séparation de la fraction riche en Ca, de densité spécifique plus légère, à grains fins (11), et de la fraction riche en Si, de densité spécifique plus lourde, à grains grossiers (12), une chaleur formée lors du processus d'extinction étant de préférence utilisée pour cela.

6. Procédé selon la revendication 1, **caractérisé en ce que** le broyage par attrition a lieu dans un broyeur à billes, un broyeur vertical ou un broyeur à cylindres.

7. Procédé selon la revendication 1, **caractérisé en ce que** le traitement thermique de la farine brute de ciment a lieu dans un échangeur thermique à surface raclée pour une suspension (1) d'un procédé de fabrication de clinker de ciment, la proportion de farine chaude (4) nécessaire pour le procédé selon la revendication 1 étant découplée du procédé de fabrication de clinker de ciment.

8. Procédé selon la revendication 1, **caractérisé en ce que** le broyage par attrition a lieu dans un broyeur à billes avec des corps de broyage céramiques.

9. Procédé selon la revendication 1, **caractérisé en ce que** le broyage par attrition a lieu dans un broyeur vertical ou un broyeur à cylindres avec une pression de broyage dans la plage allant de 0,15 à 15 N/mm².

10. Dispositif pour la fabrication de produits à base de chaux et de pouzzolane par le procédé selon la revendication 1, comprenant:
a. un échangeur thermique à surface raclée pour une suspension (1) pour le traitement thermique de farine brute de ciment (3) en farine chaude (4),
b. un appareil (6) pour l'extinction de la chaux libre contenue dans la farine chaude (4) par ajout d'eau,
c. un appareil de broyage par attrition (9) pour le broyage par attrition de la farine chaude après l'extinction de la chaux libre pour la formation d'une fraction riche en Ca, de densité spécifique plus légère, à grains fins (11), et d'une fraction riche en Si, de densité spécifique plus lourde, à grains grossiers (12), et
d. un appareil de séparation (10) pour la séparation de la fraction riche en Ca, de densité spécifique plus légère, à grains fins (11), et de la fraction riche en Si, de densité spécifique plus lourde, à grains grossiers (12).
